(19) Europäisches Patentamt
European Patent Office
Office européen des brevets

(11) Veröffentlichungsnummer: **0 043 948**
**B1**

(12) # EUROPÄISCHE PATENTSCHRIFT

(45) Veröffentlichungstag der Patentschrift: **22.08.84**

(21) Anmeldenummer: **81104873.5**

(22) Anmeldetag: **24.06.81**

(51) Int. Cl.³: **C 08 F 214/26,** C 08 F 210/02, H 01 B 3/44 // (C08F214/26, 210/02, 214/28, 214/18, 216/14, 218/02),(C08F210/02, 214/26, 214/28, 214/18, 216/14, 218/02)

(54) **Quaterpolymere vom Typ Tetrafluorethylen-Ethylen.**

(30) Priorität: **28.06.80 DE 3024456**
**14.04.81 DE 3115030**

(43) Veröffentlichungstag der Anmeldung: **20.01.82 Patentblatt 82/3**

(45) Bekanntmachung des Hinweises auf die Patenterteilung: **22.08.84 Patentblatt 84/34**

(84) Benannte Vertragsstaaten: **BE DE FR GB IT NL**

(56) Entgegenhaltungen:
**DE - A - 2 444 516**
**DE - A - 2 836 296**
**FR - A - 2 030 642**
**FR - A - 2 343 757**

(73) Patentinhaber: **HOECHST AKTIENGESELLSCHAFT, Postfach 80 03 20, D-6230 Frankfurt am Main 80 (DE)**

(72) Erfinder: **Sulzbach, Reinhard Albert, Dr., Kammererstrasse 10, D-8263 Burghausen/Salzach (DE)**

**EP 0 043 948 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Quaterpolymere mit thermoplastischen Eigenschaften, die aus copolymerisierbaren Einheiten des Tetrafluorethylens, des Ethylens, des Hexafluorpropylens und eines weiteren Monomeren aufgebaut sind, sowie deren Verwendung.

Copolymere, aufgebaut aus Einheiten des Tetrafluorethylens und des Ethylens sind seit langem bekannt. Sie zeigen eine ausgezeichnete Chemikalienbeständigkeit, eine hohe thermische Stabilität und gute elektrische Eigenschaften. Sie können nach den für Thermoplaste gebräuchlichen Verfahren aus der Schmelze verarbeitet werden und eignen sich als Ausgangsmaterialien für die Herstellung von Isolierungen für elektrische Leiter sowie zur Herstellung von Folien und Spritzgussteilen.

Diese Copolymeren aus Tetrafluorethylen und Ethylen mit einem Schmelzpunkt von etwa 275°C besitzen den Nachteil, dass sie in einem Temperaturbereich von über 150°C, der bei der Verarbeitung aus der Schmelze in jedem Fall durchlaufen werden muss, schlechte Zug-Dehnungs-Eigenschaften aufweisen. Zum Beispiel sind Drahtüberzüge im Temperaturbereich zwischen 150°C und 200°C ausgesprochen spröde und reissen schon bei geringer Spannung ab. Die Bruchdehnung dieser Polymeren, die bei Raumtemperatur mehr als 250% beträgt, liegt bei 200°C unter 20%.

Zur Überwindung dieses Nachteils wurden Copolymere geschaffen, die aus Tetrafluorethylen, Ethylen und einem weiteren copolymerisierbaren Vinylmonomeren bestehen, also Terpolymere sind. Solche Terpolymere sind bekannt aus der US-PS 3 624 250, US-PS 4 166 165, DE-OS 28 36 296 sowie aus den offengelegten japanischen Patentanmeldungen 50-143 888, 50-143 889 und 50-143 890. Terpolymere aus Tetrafluorethylen, Ethylen und Hexafluorpropylen sind bekannt aus der GB-PS 1 355 595 und der US-PS 3 960 825.

Insbesondere aus der US-PS 3 624 250 ist bekannt, dass eine merkliche Verbesserung der Zug-Dehnungs-Eigenschaften bei hoher Temperatur nur dann erreicht wird, wenn durch das als Termonomeres verwendete Vinylmonomere Seitenketten mit mindestens 2 Kohlenstoffatomen in das Terpolymere eingeführt werden. Zur Eigenschaftsverbesserung ist also eine «Mindestsperrigkeit» der eingeführten Seitenketten erforderlich. Werden Termonomere eingeführt, die lediglich ein einziges C-Atom in die Seitenkette einführen, wie Hexafluorpropylen, Perfluor(methylvinyl)-ether oder Isobutylen, so tritt keine ausreichende Verbesserung der Zugfestigkeit und der Bruchdehnung ein, wie in Beispiel IX der US-PS 3 624 250 ausgeführt wird. Dies gilt auch für die Terpolymeren gemäss der US-PS 3 960 825 und der GB-PS 1 355 595, die aus Tetrafluorethylen, Ethylen und Hexafluorpropylen bestehen.

Die Zug-Dehnungs-Eigenschaften, das heisst die Werte von Zugfestigkeit und Bruchdehnung, dieser Terpolymeren im Temperaturbereich zwischen 150°C und 200°C werden nicht allein von Art und Grösse der in die Kette eingeführten «sperrigen» Seitengruppen bestimmt, sondern sie hängen auch stark von der Zahl der eingeführten Seitengruppen ab. Die Menge des als Termonomeres einzubauenden Vinylmonomeren ist also bei Vorgabe bestimmter Zug-Dehnungs-Werte festgelegt und kann nur dann reduziert werden, wenn man gleichzeitig einen Rückgang dieser Zug-Dehnungs-Eigenschaften in Kauf nimmt.

Als copolymerisierbare, «sperrige» Termonomere wurden verschiedene Verbindungsklassen beschrieben, die man aufgliedern kann in fluorfreie, partiell fluorierte und perfluorierte Vinylmonomere. Allgemein gilt, dass die chemische und thermische Beständigkeit solcher Terpolymeren mit zunehmendem Fluorierungsgrad des Termonomeren erheblich zunimmt. Mit zunehmendem Fluorierungsgrad steigen allerdings auch die Kosten für die Herstellung des Termonomeren und damit auch für das Terpolymere stark an. Aus dieser Sicht wäre es wünschenswert, mit einer minimalen Menge an Termonomeren auszukommen, um im Falle des Einsatzes von nichtfluorierten oder partiell fluorierten Vinylverbindungen die chemische und thermische Stabilität möglichst wenig zu beeinträchtigen, und im Falle des Einsatzes der kostspieligen perfluorierten Vinylmonomeren den Kostenanteil des Termonomeren möglichst klein zu halten.

Es besteht daher ein Bedürfnis nach Copolymeren des Tetrafluorethylen-Ethylen-Typs, die im Vergleich zu den herkömmlichen Terpolymeren mit einer geringeren Menge einer die Zug-Dehnungs-Eigenschaften verbessernden «sperrigen» Vinylverbindung als Drittkomponente hergestellt werden können, um damit auch bei Einsatz von nichtfluorierten oder partiell fluorierten Vinylverbindungen einen befriedigenden Kompromiss zwischen thermischer und chemischer Stabilität einerseits und dem Zug-Dehnungs-Verhalten andererseits zu erzielen.

Diesem Bedürfnis trägt die vorliegende Erfindung Rechnung durch ein thermoplastisches, fluorhaltiges Quaterpolymeres, bestehend aus

a) 55 bis 30 Mol.-% an copolymerisierten Einheiten des Tetrafluorethylens,

b) 60 bis 40 Mol.-% an copolymerisierten Einheiten des Ethylens,

c) 10 bis 1,5 Mol.-% an copolymerisierten Einheiten des Hexafluorpropylens,

d) 2,5 bis 0,05 Mol.-% an copolymerisierten Einheiten eines Vinylmonomeren aus der Gruppe

$d_1$) der perfluorierten Olefine der Formel

$$CF_2 = CF\text{-}Rf1,$$

worin Rf1 ein Perfluoralkylrest mit 2 bis 10 C-Atomen ist,

$d_2$) der perfluorierten Vinylether der Formel

$$CF_2 = CF\text{-}O\text{-}Rf2,$$

worin Rf2 ein Perfluoralkylrest mit 2 bis 10 C-Atomen ist,

$d_3$) der perfluorierten Vinylether der Formel

$$CF_2 = CF\text{-}O\text{-}\left[\begin{array}{c} CF_2\text{-}CF\text{-}O \\ | \\ CF_3 \end{array}\right]_n\text{-}CF_2\text{-}CF_2\text{-}CF_3,$$

worin n = 1 bis 4 ist,

$d_4$) der perfluorierten Vinylether der Formel

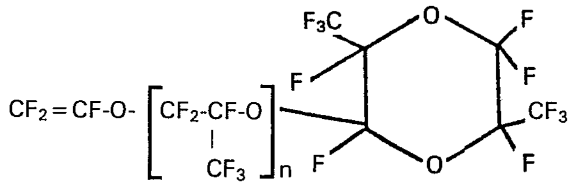,

worin n = 0 bis 1 ist,

$d_5$) Perfluor-2-methylen-4-methyl-1,3--dioxolan,

$d_6$) der perfluorierten Vinylether der Formel

$CF_2 = CF\text{-}O\text{-}(CF_2)_n\text{-}COX_1$,

worin $X_1$ für F, OH, $OR_1$ oder $NR_2R_3$, $R_1$ für eine Alkylgruppe mit 1 bis 3 C-Atomen und $R_2$ und $R_3$ jeweils für ein Wasserstoffatom oder für $R_1$ stehen und n eine Zahl von 1 bis 10 bedeutet,

$d_7$) der perfluorierten Vinylether der Formel

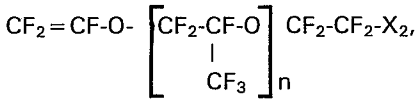

worin $X_2$ für $COOR_4$, COOH oder CN steht, $R_4$ eine Alkylgruppe mit 1 bis 3 C-Atomen und n eine Zahl von 1 bis 4 bedeutet,

$d_8$) der perfluoralkylsubstituierten Vinylverbindungen der Formel

$CH_2 = CH\text{-}Rf3$,

worin Rf3 ein Perfluoralkylrest mit 2 bis 10 C-Atomen ist,

$d_9$) 1,1,1-Trifluor-2-(trifluormethyl)-4-penten--2-ol,

$d_{10}$) Allyl-1-hydroxyhexafluorisopropylether,

$d_{11}$) der fluorierten Allylether der Formel

$CH_2 = CR_5\text{-}CH_2\text{-}O\text{-}CF_2\text{-}CFX_3H$,

worin $X_3$ = F, Cl oder Trifluormethyl und $R_5$ = H oder $CH_3$ ist,

$d_{12}$) der fluorierten Vinylether der Formel

$CH_2 = CH\text{-}O\text{-}CF_2\text{-}CFX_3H$,

worin $X_3$ = F, Cl oder Trifluormethyl ist,

$d_{13}$) der Allyl- oder Methallylester der Formel

$CH_2 = CR_6\text{-}CH_2\text{-}OCO\text{-}R_7$,

worin $R_6$ = H oder $CH_3$ und $R_7$ ein Alkylrest mit 1 bis 3 C-Atomen ist,

$d_{14}$) der Vinylester der Formel

$CH_2 = CH\text{-}O\text{-}CO\text{-}R_8$,

worin $R_8$ ein Alkylrest mit 1 bis 3 C-Atomen ist.

Es wurde überraschenderweise gefunden, dass das Zug-Dehnungs-Verhalten eines solchen Copolymeren des Ethylen-Tetrafluorethylen-Typs, also dessen Zugfestigkeit und insbesondere dessen Bruchdehnung, nochmals wesentlich verbessert werden kann, wenn man ausser der «sperrigen» Vinylverbindung zusätzlich 1,5 bis 10 Mol.-%, vorzugsweise 3 bis 8 Mol.-%, insbesondere 3 bis 5 Mol.-%, an copolymerisierten Einheiten des Hexafluorpropylens in das Copolymere einbaut. Dieser Befund ist deshalb überraschend, da nach dem Verhalten der bekannten Terpolymeren erwartet werden musste, dass Hexafluorpropylen aufgrund seiner mangelnden «Sperrigkeit» keinen wesentlichen Beitrag zur Verbesserung der Zug-Dehnungs-Eigenschaften im Temperaturbereich zwischen 150°C und 200°C leisten würde. Bei mengenmässig gleichem Einbau an «sperrigem» Vinylmonomer sind die erfindungsgemässen Quaterpolymeren den bekannten Terpolymeren in ihrer Zugfestigkeit und ihrer Bruchdehnung sowohl bei Raumtemperatur als auch im Temperaturbereich zwischen 150°C und 200°C überlegen. Insbesondere die wesentlich verbesserte Bruchdehnung bei hohen Temperaturen hat zur Folge, dass aus den erfindungsgemässen Quaterpolymeren hergestellte Formkörper, wie beispielsweise Spritzgussteile oder Drahtüberzüge, bei solchen Temperaturen einer erhöhten mechanischen Beanspruchung ausgesetzt werden können und somit bei ihrer Herstellung und im Gebrauch verringerte Rissanfälligkeit aufweisen.

Werden bestimmte Bruchdehnungswerte bei einer Temperatur zwischen 150°C und 200°C als gewünschte Zielgrösse vorgegeben, so können diese Werte bei den erfindungsgemässen Quaterpolymeren mit einer geringeren Menge des «sperrigen» Vinylmonomeren erreicht werden.

Dieser Sachverhalt ist aus den Werten der Tabelle III ersichtlich. Dort sind die bei 23°C und 160°C gemessenen Zugfestigkeits- und Bruchdehnungswerte angegeben, die einerseits mit erfindungsgemässen Quaterpolymeren (Beispiele 1 bis 18) und andererseits mit Terpolymeren entsprechender Zusammensetzung erhalten werden, welche keine Hexafluorpropylen-Einheiten enthalten und auf Schmelzindex--Werte im gleichen Bereich eingestellt sind. Die jeweils zu vergleichenden Ter- und Quaterpolymeren wurden unter gleichen Polymerisationsbedingungen hergestellt. Tabelle III zeigt, dass die erfindungsgemässen Quaterpolymeren, die zusätzlich Hexafluorpropylen-Einheiten enthalten, bei etwa gleichem Einbau der jeweils verwendeten «sperrigen» Vinylmonomeren ohne Ausnahme sowohl bei Raumtemperatur als auch bei 160°C bessere Bruchdehnungswerte ergeben, als die entsprechenden Terpolymeren gleicher Zusammensetzung unter Ausschluss von Hexafluorpropylen. Andererseits zeigen die erfindungsgemässen Quaterpolymeren auch ein wesentlich günstigeres Zug-Dehnungs-Verhalten als die bekannte Terpolymeren, die aus Tetrafluorethylen, Ethylen und Hexafluorpropylen aufgebaut sind (Tabelle III, Beispiel 4, verglichen mit Vergleichsbeispiel E).

Aus der Tabelle III ist ferner ersichtlich, dass zur Erzielung einer bestimmten Bruchdehnung bei 160°C bei den ohne Hexafluorpropylen hergestellten Terpolymeren ein Vielfaches an «sperriger» Vinylkomponente im Vergleich zu den erfindungsgemässen Quaterpolymeren eingebaut werden muss.

So zeigt ein Vergleich des Beispiels 4 mit Vergleichsbeispiel A der Tabelle III, dass bei einem Terpolymeren eine etwa 2,5fache Menge an Perfluor(propylvinyl)-ether eingebaut werden muss als bei

einem erfindungsgemässen Quaterpolymeren, wenn eine Bruchdehnung von 500% bei 160°C erreicht werden soll. Beispiel 13 und die Vergleichsbeispiele I und J der Tabelle III zeigen, dass zur Erzielung einer Bruchdehnung von 600% bei 160°C beim Terpolymeren die etwa doppelte Menge an Tetrafluorethylallylether eingeführt werden muss, beziehungsweise dass bei Einbau der gleichen Menge nur eine Bruchdehnung von 25% bei 160°C erzielt wird.

Die Vergleiche zeigen deutlich, dass sich durch den erfindungsgemässen zusätzlichen Einbau von Hexafluorpropylen-Einheiten in das Copolymere überraschenderweise die eingebaute Menge der «sperrigen» Vinylverbindung reduzieren lässt und man trotz des verringerten Gehalts Produkte mit guten Bruchdehnungs-Werten bei hoher Temperatur und mit geringer Sprödigkeit erhält.

Zur Herstellung der erfindungsgemässen Quaterpolymeren können als «sperrige» Vinylmonomere verschiedene Verbindungsklassen mit einer Vinylgruppierung eingesetzt werden. Dies sind Vinylmonomere aus folgenden Gruppen:

$d_1$) Perfluorierte Olefine der Formel $CF_2 = CF\text{-}Rf1$, worin Rf1 ein Perfluoralkylrest mit 2 bis 10, vorzugsweise mit 2 bis 5 C-Atomen ist. Zu den bevorzugten Verbindungen zählen insbesondere Perfluorpenten, Perfluorhexen und Perfluorhepten. Die Herstellung solcher längerkettiger perfluorierter Olefine ist bekannt und beispielsweise beschrieben in der US-PS 2 668 864.

$d_2$) Perfluorierte Vinylether der Formel

$CF_2 = CF\text{-}O\text{-}Rf2$,

worin Rf2 ein Perfluoralkylrest mit 2 bis 10 vorzugsweise 2 bis 4 C-Atomen ist. Zu nennen sind der Perfluor-n-ethyl-, Perfluor-n-butyl- und insbesondere der Perfluor-n-propyl-Rest. Die Herstellung solcher Perfluor(alkylvinyl)-ether ist bekannt aus der US-PS 31 80 895.

$d_3$) Perfluorierte Vinylether der Formel

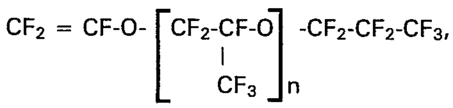

worin n = 1 bis 4, vorzugsweise 1 oder 2 ist. Die Herstellung solcher perfluorierter Vinylether ist bekannt aus der US-PS 3 450 684.

$d_4$) Perfluorierte Vinylether der Formel

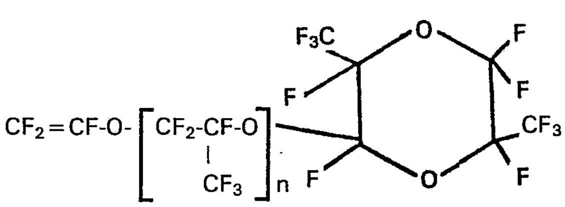

worin n = 0 bis 1, vorzugsweise 0 ist. Die Herstellung dieser Monomeren ist beschrieben in der US-PS 40 13 689.

$d_5$) Perfluor-2-methylen-4-methyl-1,3-dioxolan, dessen Herstellung aus der US-PS 3 308 107 bekannt ist.

$d_6$) Perfluorierte Vinylether der allgemeinen Formel $CF_2 = CF\text{-}O\text{-}(CF_2)_n\text{-}COX_1$, worin $X_1$ für F, OH, $OR_1$ oder $NR_2R_3$, steht und wobei $R_1$ eine Alkylgruppe mit 1 bis 3 C-Atomen ist und $R_2$ und $R_3$ jeweils für ein Wasserstoffatom oder für $R_1$ stehen und n eine Zahl von 1 bis 10 bedeutet. Die Herstellung solcher Monomeren ist bekannt aus der GB-PS 1 145 445. Bevorzugt ist X = OH oder $OCH_3$.

$d_7$) Fluorierte Vinylether der Formel

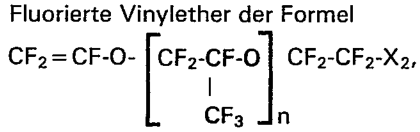

worin $X_2$ für $COOR_4$, COOH oder CN steht, $R_4$ eine Alkylgruppe mit 1 bis 3 C-Atomen und n eine ganze Zahl von 1 bis 4 bedeutet. Die Herstellung solcher Comonomeren ist beschrieben in der US-PS 4 138 426. Bevorzugt ist $X_2$ = COOH oder $COOCH_3$.

$d_8$) Perfluoralkylsubstituierte Vinyl-Verbindungen der Formel $CH_2 = CH\text{-}Rf3$, worin Rf3 ein Perfluoralkylrest mit 2 bis 10, vorzugsweise 2 bis 6 C-Atomen ist. Solche teilfluorierten Olefine werden hergestellt durch Anlagerung von Ethylen an ein Perfluoralkyliodid und anschliessende Dehydrohalogenierung mit Alkalihydroxid, wie beschrieben in der US-PS 3 535 381.

$d_9$) 1,1,1-Trifluor-2-(trifluormethyl)-4-penten-2-ol

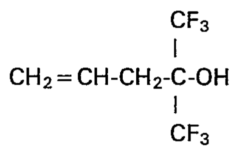 ,

dessen Herstellung aus der US-PS 3 444 148 bekannt ist.

$d_{10}$) Allyl-1-hydroxy-hexafluorisopropylether

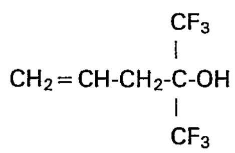 ,

das durch Anlagerung von Allylalkohol an Hexafluoraceton entsteht, wie beschrieben in der FR-PS 2 178 724.

$d_{11}$) Verbindungen der allgemeinen Formel $CH_2 = CR_5\text{-}CH_2\text{-}O\text{-}CF_2\text{-}CFX_3H$, worin $R_5$ = H oder $CH_3$ und $X_3$ = F, Cl oder Trifluormethyl, vorzugsweise F ist. Solche Monomeren können hergestellt werden durch die Anlagerung des entsprechenden Fluor- oder Chlorfluorolefins an Allylalkohol, wie beschrieben in der US-PS 2 975 161.

$d_{12}$) Fluorierte Vinylether der Formel $CH_2 = CH\text{-}O\text{-}CF_2\text{-}CFX_3H$, worin $X_3$ = F, Cl oder Trifluormethyl, vorzugsweise F ist. Sie können hergestellt werden nach US-PS 2 631 975.

$d_{13}$) Allyl- oder Methallylester der Formel $CH_2 = CH\text{-}CH_2\text{-}O\text{-}CO\text{-}R_5$, worin $R_5$ ein Alkylrest mit 1 bis 3 C-Atomen, vorzugsweise ein Methylrest ist.

$d_{14}$) Vinylester der allgemeinen Formel $CH_2 = CH\text{-}O\text{-}CO\text{-}R_6$, worin $R_6$ ein Alkylrest mit 1 bis 3 C-Atomen, insbesondere ein Methylrest ist.

Von diesen vorstehend genannten Gruppen sind bevorzugt die Gruppen $d_1$), $d_8$), $d_9$), $d_{11}$) und $d_{12}$), besonders bevorzugt $d_2$), $d_3$) und $d_4$).

Es liegt im Rahmen dieser Erfindung, dass auch Gemische solcher «sperriger» Vinylmonomerer eingebaut werden können, die dann insgesamt die Quaterkomponente bilden, wobei das Gesamtpolymere jedoch aus mehr als 4 Monomeren bestehen kann.

Für die vorstehend genannten Vinylmonomeren gilt allgemein, dass sie telogen weitgehend inaktiv sind, so dass ein Quaterpolymeres im für die thermoplastische Verarbeitung geeigneten Molekulargewichtsbereich gebildet wird. Durch die Sperrigkeit der durch diese Vinylmonomeren eingeführten Seitenketten wird eine Beeinflussung des Kristallisationsverhaltens des Copolymeren erreicht, was der Fall ist, wenn Seitenketten mit mindestens 2 Kohlenstoffatomen eingeführt werden. Legt man ausschliesslich Wert auf eine Verbesserung des Zug-Dehnungs-Verhaltens, so ist die Art und Beschaffenheit der eingebauten «sperrigen» Seitenkette weitgehend unkritisch. Wird zusätzlich eine möglichst gute chemische und thermische Stabilität des Copolymeren gefordert, so sind Vinylmonomere vorzuziehen, die hochgradig fluorsubstituiert, vorzugsweise perfluoriert sind.

Im allgemeinen gilt etwa, dass durch den Einbau von 3 bis 5 Mol.-% an copolymerisierten Einheiten des Hexafluorpropylens in das Quaterpolymere der Gehalt an «sperrigem» Vinylmonomer im Vergleich zu den entsprechenden Terpolymeren um den Faktor 2 bis 3,5 reduziert werden kann.

Der Gehalt an «sperrigem» Vinylmonomer in den erfindungsgemässen Quaterpolymeren wird in erster Linie durch die gewünschten Produkteigenschaften bestimmt. Er beträgt 0,05 bis 2,5 Mol.-%, vorzugsweise 0,1 bis 1 Mol.-% und insbesondere 0,2 bis 0,8 Mol.-% an copolymerisierten Einheiten, die sich von einem der obengenannten «sperrigen» Vinylmonomeren herleiten. Der Gehalt an copolymerisierten Tetrafluorethylen-Einheiten beträgt 55 bis 30 Mol.-%, vorzugsweise 55 bis 40 Mol.-%, der Gehalt an copolymerisierten Ethylen-Einheiten 60 bis 40 Mol.-%, vorzugsweise 55 bis 45 Mol.-%.

Damit die erfindungsgemässen Quaterpolymeren nach thermoplastischen Formgebungsmethoden aus der Schmelze verarbeitbar sind, soll das Molekulargewicht so eingestellt werden, dass die unter einer Scherspannung von $1 \cdot 10^5$ Pa bei 300°C gemessene Schmelzviskosität im Bereich zwischen $4 \cdot 10^2$ bis $2 \cdot 10^4$ Pa s liegt. Als Mass für die Fliessfähigkeit des Polymeren wird im allgemeinen der Schmelzindex (MFI-Wert; MFI = melt flow index) herangezogen. Der bei 300°C und einer Belastung mit einer Masse von 11 kg gemessene MFI-Wert soll im Bereich von 5 bis 200 g/10 min, vorzugsweise 10 bis 100 g/10 min liegen. Insbesondere für die Herstellung von Überzügen für elektrische Leiter sind Copolymere mit einem MFI-Wert von 15 bis 50 g/10 min geeignet.

Die erfindungsgemässen Quaterpolymeren besitzen in Abhängigkeit von ihrer chemischen Zusammensetzung einen Schmelzpunkt, gemessen durch Differential-Thermoanalyse als Minimum der Schmelzkurve zwischen 245 und 280°C. Bei zunehmendem Gehalt des Quaterpolymeren an copolymerisierten Hexafluorpropylen-Einheiten wird der Schmelzpunkt innerhalb dieses Bereichs erniedrigt.

Die erfindungsgemässen Quaterpolymeren können nach bekannten Polymerisationsverfahren hergestellt werden, das heisst, es kann nach dem Verfahren der Lösungspolymerisation, der Suspensionspolymerisation, der Emulsionspolymerisation, aber auch der Masse- oder Gasphasenpolymerisation gearbeitet werden. Die Herstellung durch Polymerisation in organischen Lösungsmitteln oder durch Suspensions- oder Emulsionspolymerisation in wässriger Phase ist bevorzugt. Als Reaktionsmedien kommen neben organischen Lösungsmitteln und Wasser auch Gemische aus organischen Lösungsmitteln und Wasser in Frage. Bevorzugte organische Lösungsmittel sind Fluoralkane oder Chlorfluoralkane mit 1 bis 4 C-Atomen.

Die Polymerisation in Chlorfluoralkanen als Lösungsmittel ist beispielsweise beschrieben in der US-PS 3 528 954, die Polymerisation in Gemischen aus Fluoralkanen oder Chlorfluoralkanen und Wasser in den japanischen Offenlegungsschriften 49-011 746 und 49-024 295. Die Copolymerisation kann auch durchgeführt werden in Gemischen von tert.-Butylalkohol und Wasser, wie beispielsweise bekannt aus der US-PS 2 468 664. Die Copolymerisation in einem rein wässrigen Reaktionsmedium ist insbesondere bekannt aus der US-PS 3 859 262.

Die Reaktionsbedingungen zur Durchführung der Copolymerisation hängen von dem gewählten Polymerisations-Verfahren ab. Die Reaktionstemperatur liegt im üblichen Bereich zwischen —50°C und +150°C, vorzugsweise im Bereich von +20°C bis +100°C.

Erfolgt die Copolymerisation in organischen Lösungsmitteln, wie insbesondere Fluoralkanen oder Chlorfluoralkanen, werden als Polymerisationsinitiatoren vorzugsweise die üblichen, freie Radikale liefernden organischen Peroxyverbindungen oder Azoverbindungen eingesetzt. Es ist aber auch möglich, die Polymerisation durch energiereiche Strahlung, wie beispielsweise Gammastrahlen eines radioaktiven Elements, zu starten. Bei der Durchführung der Copolymerisation in wässrigem Medium können die üblichen, radikalbildenden, wasserlöslichen Polymerisationsinitiatoren, wie beispielsweise Ammoniumpersulfat, eingesetzt werden. Bevorzugte Initiatoren bei der Copolymerisation im wässrigen Medium sind die in der US-PS 3 859 262 beschriebenen Säuren des Mangans und deren Salze.

Die Copolymerisation zu den erfindungsgemässen Quaterpolymerisaten erfolgt mit einem Gesamtmonomerendruck im üblichen Bereich von 2 bis 50 bar. Die Zusammensetzung wird in üblicher Weise gesteuert durch die molaren Verhältnisse der Monomeren-Komponenten. Im Polymerisationsreaktor soll das molare Verhältnis der Summe aus Tetrafluorethylen und Hexafluorpropylen zu Ethylen im Bereich von 60 : 40 bis 85 : 15, vorzugsweise von 65 : 35 bis 75 : 25, liegen. Das «sperrige» Vinylmonomere wird in einem 1,05- bis 5fachen Überschuss, bezogen auf die gewünschte Einbaumenge im Copolymerisat, über die Polymerisationsdauer eingefahren. Die molaren Verhältnisse der Monomeren werden zur Erzielung einer einheitlichen Zusammensetzung des Quaterpolymeren bevorzugt durch Zuspeisung der Monomeren während der gesamten Polymerisationsdauer konstant gehalten. Nichtumgesetzte Monomere können nach der Copolymerisation nach bekannten Verfahren zurückgewonnen werden.

Zur Einstellung des Molekulargewichts bzw. des daraus resultierenden MFI-Wertes werden übliche Kettenübertragungsmittel bei der Copolymerisation zugegeben. Wird die Copolymerisation in organischen Lösungsmitteln oder deren Gemischen mit Wasser vorgenommen, so sind dies die bekannten wasserstoffhaltigen organischen Verbindungen, wie beispielsweise Cyclohexan oder Aceton. Wird im wässrigen System gearbeitet, so sind Dialkylester der Malonsäure besonders bevorzugt.

Wird die Copolymerisation nach dem Verfahren der Emulsionspolymerisation in wässriger Phase durchgeführt, so fallen die erfindungsgemässen Quaterpolymeren in Form wässriger, kolloidaler Dispersionen an, mit einem Polymerisat-Feststoffgehalt von 15 bis 30 Gew.-%, bezogen auf wässriges Medium. Die Dispersionspartikel besitzen einen mittleren Teilchendurchmesser von 0,05 bis 0,35 $\mu$m, vorzugsweise von 0,10 bis 0,25 $\mu$m. Die Grössenverteilung der Dispersionspartikel ist sehr eng und die Teilchen besitzen eine kugelige Form. Sie besitzen ferner eine Viskosität, gemessen mit einem Rotationsviskosimeter bei 20°C, im Bereich von 2 bis 4 mPas sowie eine ausserordentlich hohe Stabilität gegen die Einwirkung von Scherkräften. Aus diesen Dispersionen kann der Polymerisat-Feststoff nach üblichen Koagulationsmethoden, zum Beispiel durch Rühren oder Zugabe von Koagulationsmitteln, und anschliessende Trocknung gewonnen werden.

Die erfindungsgemässen Quaterpolymeren können nach thermoplastischen Formgebungsverfahren aus der Schmelze zu Folien, Rohren, Stäben, Spritzgussteilen und anderen Formkörpern verarbeitet werden. Sie eignen sich ferner zur Herstellung von Monofilen mit guten mechanischen Eigenschaften, die sich zu Geweben mit guter thermischer und chemischer Beständigkeit weiterverarbeiten lassen. Die erfindungsgemässen Quaterpolymeren mit einem $MFI_{11}$-Wert von 15 bis 50 g/10 min sind besonders geeignet zur Herstellung von Überzügen für elektrische Leiter. Die daraus hergestellten Drahtüberzüge sind bei hoher Temperatur nicht spröde und zeigen keine Neigung zur Rissbildung. Bei gleichem Gehalt an «sperrigem» Vinylmonomer zeigen Drahtüberzüge, die aus den erfindungsgemässen Quaterpolymeren hergestellt wurden, ein besseres Ergebnis im «Stress-Cracking»-Test und besitzen eine höhere Bruchdehnung und Zugfestigkeit als die entsprechenden Terpolymeren. Ausserdem weisen dünne Drahtisolierungen, die aus den erfindungsgemässen Quaterpolymeren hergestellt wurden, weniger Fehlstellen und elektrische Durchschläge auf als unter gleichen Bedingungen aus den entsprechenden Terpolymeren hergestellte Überzüge.

Die erfindungsgemässen Quaterpolymeren unterscheiden sich von den entsprechenden Terpolymeren, die kein Hexafluorpropylen enthalten, wesentlich in ihrem Weitwinkel-Röntgenspektrum. Die Auswertung dieser Spektren zeigt, dass die Kristallstruktur der Quaterpolymeren von derjenigen der Terpolymeren erheblich abweicht. Die günstigeren anwendungstechnischen Eigenschaften der erfindungsgemässen Quaterpolymeren werden auf die durch den zusätzlichen Einbau von Hexafluorpropylen verursachten Änderungen in der Kristallstruktur zurückgeführt.

In die erfindungsgemässen Quaterpolymeren können übliche Füllstoffe und/oder Pigmente eingearbeitet werden. So können sie beispielsweise durch 5 bis 50 Gew.-% an Glasfasern verstärkt werden, die gegebenenfalls vorher mit einem Silankupplungsmittel behandelt worden sind.

Die in der Beschreibung und in den Beispielen angegebenen, die erfindungsgemässen Quaterpolymeren und die zum Vergleich hergestellten Terpolymeren charakterisierenden Grössen werden nach folgenden Messmethoden bestimmt:

1. *Fluorgehalt*

Der Fluorgehalt (Gew.-%) der Copolymeren wird bestimmt durch Verbrennung in einer Wickbald-Apparatur und anschliessender Titration mit Thoriumnitrat im Potentiographen.

2. *Gehalt an Hexafluorpropylen*

Die Bestimmung des Gehaltes an Hexafluorpropylen (in Gew.-%) erfolgt durch IR-Analyse an bei 280°C gepressten Folien mit einer Schichtdicke zwischen 100 und 300 $\mu$m. Die Schichtdickenmessung wird mit einer Mikrometerschraube vorgenommen. Die Analysen werden mit einem Fourier-Transform-IR-Spektrofotometer der Firma Nicolet, Modell HX-1, durchgeführt. Zur Kompensation wird eine gleichartige Folie aus einem Copolymeren, bestehend ausschliesslich aus Tetrafluorethylen und Ethylen, eingesetzt. Ausgewertet wird die Bande $\nu$ = 490 $cm^{-1}$. Der Hexafluorpropylengehalt errechnet sich nach folgender Formel:

$$\underset{\text{(Gew.-\%)}}{\text{Hexafluorpropylen}} = \frac{\text{Extinktion bei 490 cm}^{-1}}{\text{Schichtdicke (mm)}} \cdot 3$$

3. *Gehalt an «sperrigem» Vinylmonomer*

Der Einbau der «sperrigen» Vinylmonomeren der Gruppen $d_1$) bis $d_{14}$) wird durch Stoffbilanz ermittelt, indem man die dem Reaktor zugeführte Gesamtmenge, abzüglich der nach der Copolymerisation im Reaktor verbleibenden Menge des jeweiligen Monomeren bestimmt.

4. *Gehalt an Tetrafluorethylen*

Der Gehalt an Tetrafluorethylen ergibt sich aus dem Fluorwert, der nach Abzug des durch Hexafluorpropylen und durch das jeweilige «sperrige» Vinylmonomere bedingten Fluoranteils vom analytisch bestimmten Fluorgehalt verbleibt.

5. *Dichte*

Die Bestimmung erfolgt nach der DIN-Norm 53 479 an einem aus der Schmelze extrudierten 2 mm dicken Strang.

6. *MFI-Wert (Schmelzindex)*
Die Bestimmung erfolgt nach der DIN-Norm 53 735-70 mit einer Düse von 2,1 mm Durchmesser und einer Länge von 8 mm bei 300°C und einer Belastung mit einer Masse von 11 kg.

7. *Schmelzpunkt*
Der Schmelzpunkt wird angegeben als das Minimum des Schmelzbereichs, den man mit einem «Differential-Scanning»-Kalorimeter misst.

8. *Bruchdehnung und Zugfestigkeit*
Die Bruchdehnung und Zugfestigkeit wird gemessen an einem Prüfkörper nach ASTM D-1708, der aus einer druckgesinterten Platte mit den Abmessungen 95·95·2 mm gestanzt wird. Die Platte wird hergestellt, indem man 38 g Copolymeren-Pulver oder -Schmelzgranulat mindestens 1 Stunde auf 300°C erhitzt und unter einem Druck von maximal 200 bar abkühlt. Der Druck von 200 bar wird innerhalb von 5 Minuten erreicht. Die Prüfung von Bruchdehnung und Zugfestigkeit erfolgt bei 23°C und 160°C nach ASTM D-638.

9. *«Stress-Cracking»-Test*
Der mit einem Überzug von 250 μm Dicke aus dem jeweiligen Copolymeren versehene Draht wird bei 200°C 3 Stunden lang getempert. Dann wird dieser Draht fünfmal um seinen eigenen Durchmesser gewickelt. Es werden fünf Parallelproben auf diese Weise hergestellt. Die gewickelten Drähte werden nochmals 3 Stunden bei 200°C getempert. Danach werden die Wickel gelöst und auf Risse und elektrische Durchschlagsfestigkeit geprüft.

10. *Prüfung der mechanischen Eigenschaften der Drahtüberzüge*
Die Prüfung der mechanischen Eigenschaften von Drahtüberzügen erfolgt nach den VDE-Prüfvorschriften Nr. 0472 und Nr. 0881.

Die Erfindung wird durch folgende Beispiele erläutert:

*Beispiele 1 bis 12, Vergleichsbeispiele A bis H*

Die erfindungsgemässen Quaterpolymeren der Beispiele 1 bis 12 und die Terpolymeren der Vergleichsbeispiele A bis H werden unter folgenden Reaktionsbedingungen hergestellt:

In einem emaillierten Polymerisationsreaktor mit einem Gesamtvolumen von 190 l, ausgestattet mit Stromstörer und Impellerrührer, werden 120 l entsalztes Wasser eingefüllt, in dem 485 g Diammoniumoxalat-Monohydrat, 485 g Perfluoroctansäure und 135 g Malonsäurediethylester gelöst sind. Die Luft im verbleibenden Gasraum des Polymerisationsreaktors wird sorgfältig durch Spülen mit Stickstoff und anschliessend mit Tetrafluorethylen verdrängt. Die Rührgeschwindigkeit wird auf 235 U/min eingestellt. Sodann werden bei den Beispielen 1 bis 4 und 7 bis 12 1500 g, bei Beispiel 5 400 g und bei Beispiel 6 3000 g Hexafluorpropylen vorgelegt. Bei den Vergleichsbeispielen A bis D und F bis H wird ohne Zusatz von Hexafluorpropylen gearbeitet. Im Vergleichsbeispiel E wird nach der Vorschrift für die Beispiele 1 bis 12 gearbeitet, jedoch ist hier ausser Tetrafluorethylen, Ethylen und Hexafluorpropylen (1500 g vorgelegt) kein weiteres Monomeres zugegen.

Nun wird Tetrafluorethylen bis zu einem Gesamtmonomerdruck von 13,7 bar und anschliessend Ethylen bis zu einem Gesamtmonomerdruck von 17 bar aufgepresst. Danach werden die in Tabelle I und II angegebenen Mengen des jeweiligen «sperrigen» Vinylmonomeren zugegeben. Dann wird die Polymerisation durch Einführen einer Lösung von Kaliumpermanganat mit einem Gehalt von 20 g $KMnO_4$ pro Liter Wasser gestartet. Die Zufuhr der Kaliumpermanganat-Lösung wird nach dem Polymerisationsstart so einreguliert, dass eine Polymerisationsgeschwindigkeit von etwa 60 bis 100 g/l·h erreicht wird. Die Polymerisationstemperatur liegt bei 26 bis 27°C. Die entstehende Polymerisationswärme wird mit einem Kühlmedium über den Kühlmantel des Polymerisationsreaktors abgeführt.

Der Gesamtmonomerendruck von 17 bar wird automatisch durch kontinuierliche Zuspeisung eines Tetrafluorethylen-Ethylen-Gemisches im molaren Verhältnis von 1 : 1 aufrechterhalten. Bei den erfindungsgemässen Beispielen 1 bis 4 und 7 bis 12 und bei Vergleichsbeispiel E werden während des Polymerisationsverlaufs 3100 g Hexafluorpropylen (Beispiel 5 1200 g, Beispiel 6 6400 g Hexafluorpropylen) sowie die in Tabelle I und II angegebenen Mengen des jeweiligen Vinylmonomeren kontinuierlich zudosiert.

Die Reaktion wird bei einem Feststoffgehalt von 20 bis 22 Gew.-%, bezogen auf wässriges Medium, durch Entspannen des Monomerengemisches abgebrochen. Das Polymerisat fällt in Form einer wässrigen Dispersion an, die anschliessend durch Rühren koaguliert wird. Der resultierende Polymerfeststoff wird von der Flotte getrennt, mehrmals mit Wasser gewaschen, dann unter Stickstoffatmosphäre 15 Stunden bei 200°C getrocknet und anschliessend schmelzgranuliert. Die jeweils erhaltenen Mengen an Polymerisatfeststoff sind in Tabelle I und II angegeben. Ferner enthalten Tabelle I und II für die erfindungsgemässen Quaterpolymeren der Beispiele 1 bis 12 und für die Copolymeren der Vergleichsbeispiele A bis H folgende charakteristische Grössen: Fluorgehalt, Schmelzpunkt nach der «Differential-Scanning-Calorimetry»-Methode (DSC) sowie die Dichte.

*Beispiele 13 bis 18, Vergleichsbeispiele I bis L*

In einem emaillierten Polymerisationsreaktor mit einem Gesamtvolumen von 18 l, ausgestattet mit Stromstörer und Impellerrührer, werden 4,8 l 1,1,2-Trichlortrifluorethan vorgelegt. Die Luft im Reaktionsgefäss wird durch Ethylen verdrängt. Die Rührgeschwindigkeit beträgt 100 U/min. In das Reaktionsgefäss werden eindosiert: 290 g Hexafluorpropylen (Beispiele 14 und 18 580 g), 10 g des jeweils in Tabelle I und II genannten Vinylmonomeren (Vergleichsbeispiel J 20 g), gelöst in 100 ml 1,1,2-Trichlortrifluorethan sowie die jeweils in Tabelle I und II angegebene Menge an Cyclohexan, ebenfalls gelöst in 100 ml 1,1,2-Trichlortrifluorethan.

Der Reaktorinhalt wird nun auf 65°C aufgeheizt und die Rührerdrehzahl auf 250 U/min erhöht. Dann

wird Tetrafluorethylen bis zu einem Gesamtdruck von 7,8 bar und anschliessend Ethylen bis zu einem Gesamtdruck von 10,7 bar aufgepresst. Danach wird 1 g Bis-(4-tert.-butylcyclohexanperoxydicarbonat), gelöst in 300 ml 1,1,2-Trichlortrifluorethan zudosiert. Nach dem Polymerisationsstart wird dem Reaktionsgefäss ein Gemisch aus Ethylen und Tetrafluorethylen im Molverhältnis 1 : 1 unter Konstanthaltung des Gesamtmonomerdrucks von 10,7 bar zugeführt.

Die Copolymerisation wird bei einem Copolymerisatgehalt, bezogen auf eingesetztes 1,1,2-Trichlortrifluorethan, von etwa 6 Gew.-% abgebrochen. Der Reaktorinhalt wird sodann auf etwa - 5°C abgekühlt, die unumgesetzten Monomeren werden entspannt, der Reaktorinhalt wird abgelassen und das Lösungsmittel samt der darin noch gelösten Vinylmonomeren wird abdestilliert. Das erhaltene Copolymerisat wird danach 12 Stunden in einer Stickstoffatmosphäre auf 100°C erhitzt. Danach wird das teils zusammengebackene Produkt auf einer Hammermühle zu einem Pulver mit einer Teilchengrösse von 300 bis 400 µm gemahlen. Die jeweils erhaltenen Mengen an Copolymerisat-Pulver in kg sind in Tabelle I und II angegeben. Ferner sind in Tabelle I und II die charakteristischen Grössen Fluorgehalt, Schmelzpunkt nach DSC und Dichte verzeichnet.

In Tabelle III sind die Werte für die Zugfestigkeit und die Bruchdehnung bei 160°C und bei 23°C zusammengestellt, wobei die erfindungsgemässen Quaterpolymeren jeweils den in der Zusammensetzung entsprechenden Terpolymeren gegenübergestellt werden. Vergleichsbeispiel E zeigt die Eigenschaften des Terpolymeren aus Tetrafluorethylen, Ethylen und Hexafluorpropylen. Angegeben ist in Tabelle III ferner die Zusammensetzung der Copolymeren (in Mol.-% an eingebauten copolymerisierten Einheiten der jeweiligen Monomeren) sowie der MFI-Wert, gemessen unter Belastung einer Masse von 11 kg bei 300°C.

TABELLE I

*Herstellungsbedingungen und Eigenschaften der erfindungsgemässen Quaterpolymerisate*

| Beispiel Nr. | 1 | 2 | 3 | 4 | 5 | 6 | 7 | 8 |
|---|---|---|---|---|---|---|---|---|
| Art des «sperrigen» Vinylmonomeren | I | I | I | I | I | I | II | III |
| Einsatz an «sperrigem» Vinylmonomer (Gew.-%, bezogen auf erhaltenes Polymerisat) | 5,8 | 4,0 | 2,7 | 1,4 | 5,7 | 0,8 | 6,5 | 0,8 |
| davon vorgelegt (Gew.-%) | 1,4 | 1,0 | 0,7 | 0,3 | 1,4 | 0,2 | 1,6 | 0 |
| davon zudosiert (Gew.-%) | 4,4 | 3,0 | 2,0 | 1,0 | 4,2 | 0,6 | 4,9 | 0,8 |
| Einsatz an Hexafluorpropylen (Gew.-%, bezogen auf erhaltenes Polymerisat) | 13,3 | 12,2 | 12,5 | 12,7 | 4,5 | 24 | 12,4 | 12,2 |
| Polymerisat (kg) | 34,7 | 37,8 | 36,8 | 36,1 | 35,3 | 39,0 | 37,0 | 37,7 |
| Polymerisationsmedium | $H_2O$ | $H_2O$ | $H_2O$ | $H_2O$ | $H_2O$ | $H_2O$ | $H_2O$ | $H_2O$ |
| Kettenübertragungsmittel | MDE | MDE | MDE | MDE | MDE | MDE | MDE | MDE |
| Kettenübertragungsmittel (Gew.-%, bezogen auf erhaltenes Polymerisat) | 0,39 | 0,36 | 0,37 | 0,37 | 0,38 | 0,35 | 0,36 | 0,36 |
| Gehalt an Fluor (Gew.-%) | 61,0 | 60,6 | 61,5 | 59,8 | 61,3 | 63,0 | 60,9 | 61,3 |
| Schmelzpunkt nach DSC (°C) | 266 | 267 | 264 | 271 | 280 | 247 | 273 | 271 |
| Dichte ($g/cm^3$) | 1,714 | 1,717 | 1,726 | 1,743 | 1,722 | 1,747 | 1,730 | 1,726 |

Fortsetzung zu TABELLE I

*Herstellungsbedingungen und Eigenschaften der erfindungsgemässen Quaterpolymerisate*

| Beispiel Nr. | 9 | 10 | 11 | 12 | 13 | 14 | 15 | 16 | 17 | 18 |
|---|---|---|---|---|---|---|---|---|---|---|
| Art des «sperrigen» Vinylmonomeren | IV | V | IX | IX | III | VI | VII | VIII | I | I |
| Einsatz an «sperrigem» Vinylmonomer (Gew.-%, bezogen auf erhaltenes Polymerisat) | 0,7 | 4,1 | 1,1 | 2,2 | 2,4 | 2,7 | 2,7 | 2,6 | 2,4 | 3,8 |
| davon vorgelegt (Gew.-%) | 0,2 | 1,0 | 0,3 | 1,1 | 2,4 | 2,7 | 2,7 | 2,6 | 2,4 | 3,8 |
| davon zudosiert (Gew.-%) | 0,4 | 3,1 | 0,8 | 1,1 | 0 | 0 | 0 | 0 | 0 | 0 |
| Einsatz an Hexafluorpropylen (Gew.-%, bezogen auf erhaltenes Polymerisat) | 13,1 | 12,7 | 12,4 | 12,8 | 69 | 156 | 77 | 76 | 69 | 219 |
| Polymerisat (kg) | 35 | 36,3 | 37,0 | 36,0 | 0,420 | 0,370 | 0,376 | 0,380 | 0,420 | 0,265 |
| Polymerisationsmedium | $H_2O$ | $H_2O$ | $H_2O$ | $H_2O$ | F 113 | F 113 | F 113 | F 113 | F 113 | F 113 |
| Kettenübertragungsmittel | MDE | MDE | MEE | MEE | CHX | CHX | CHX | CHX | CHX | CHX |
| Kettenübertragungsmittel (Gew.-%, bezogen auf erhaltenes Polymerisat) | 0,38 | 0,37 | 0,36 | 0,37 | 3,0 | 2,5 | 2,3 | 3,3 | 2,8 | 4,4 |
| Gehalt an Fluor (Gew.-%) | 59,8 | 61,5 | 60,3 | 59,7 | 60,2 | 59,6 | 59,9 | 59,7 | 61,4 | 61,8 |
| Schmelzpunkt nach DSC (°C) | 268 | 268 | 272 | 271 | 265 | 272 | 268 | 277 | 274 | 255 |
| Dichte ($g/cm^3$) | 1,717 | 1,717 | 1,740 | 1,733 | 1,684 | 1,710 | 1,694 | 1,710 | 1,709 | 1,686 |

TABELLE II

*Herstellungsbedingungen und Eigenschaften von nach dem Stand der Technik bekannten Terpolymerisaten*

| Vergleichsbeispiel Nr. | A | B | C | D | E | F | G | H | I | J | K | L |
|---|---|---|---|---|---|---|---|---|---|---|---|---|
| Art des «sperrigen» Vinylmonomeren | I | I | I | I | ohne | II | III | IV | III | III | VI | VII |
| Einsatz an «sperrigem» Vinylmonomer (Gew.-%, bezogen auf erhaltenes Polymerisat) | 5,6 | 4,3 | 2,9 | 1,4 | — | 6,8 | 0,8 | 0,7 | 2,4 | 5 | 2,1 | 2,8 |
| davon vorgelegt (Gew.-%) | 1,4 | 1,1 | 0,7 | 0,4 | — | 1,7 | — | 0,2 | 2,4 | 5 | 2,1 | 2,8 |
| davon zudosiert (Gew.-%) | 4,2 | 3,3 | 2,1 | 1,1 | — | 5,1 | 0,8 | 0,4 | — | — | — | — |
| Polymerisat (kg) | 36,0 | 34,6 | 35,0 | 34,6 | 37,2 | 35,5 | 36,0 | 35,0 | 0,420 | 0,400 | 0,470 | 0,360 |
| Polymerisationsmedium | $H_2O$ | $H_2O$ | $H_2O$ | $H_2O$ | $H_2O$ | $H_2O$ | $H_2O$ | $H_2O$ | F 113 | F 113 | F 113 | F 113 |
| Kettenübertragungsmittel | MDE | MDE | MDE | MDE | MDE | MDE | MDE | MDE | CHX | CHX | CHX | CHX |
| Kettenübertragungsmittel (Gew.-%, bezogen auf erhaltenes Polymerisat) | 0,37 | 0,39 | 0,38 | 0,39 | 0,36 | 0,38 | 0,37 | 0,38 | 3,0 | 3,1 | 2,0 | 2,8 |
| Gehalt an Fluor (Gew.-%) | 61,2 | 60,0 | 60,3 | 60,5 | 61,5 | 58,8 | 60,8 | 59,9 | 60,8 | 60,6 | 60,4 | 60,2 |
| Schmelzpunkt nach DSC (°C) | 282 | 287 | 293 | 294 | 267 | 284 | 286 | 293 | 280 | 269 | 284 | 280 |
| Dichte ($g/cm^3$) | 1,731 | 1,725 | 1,720 | 1,737 | 1,726 | 1,706 | 1,741 | 1,736 | 1,726 | 1,708 | 1,759 | 1,724 |

TABELLE III

*Zusammensetzung und Eigenschaften der Quaterpolymeren im Vergleich zu entsprechenden Terpolymeren*

| Beispiel/Vergleichsbeispiel Nr. | 1 | A | 2 | B | 3 | C | 4 | D | E | 5 |
|---|---|---|---|---|---|---|---|---|---|---|
| Eingebaute Menge (Mol.-%) an: | | | | | | | | | | |
| Tetrafluorethylen | 46,8 | 52,7 | 46,8 | 50,5 | 48,2 | 51,2 | 44,5 | 51,8 | 48,5 | 50,9 |
| Ethylen | 48,1 | 46,6 | 48,7 | 49,0 | 46,9 | 48,4 | 50,5 | 47,9 | 46,8 | 46,8 |
| «Sperriges» Vinylmonomer | 0,8 | 0,7 | 0,5 | 0,5 | 0,4 | 0,4 | 0,3 | 0,3 | — | 0,7 |
| Art des «sperrigen» Vinylmonomeren | I | I | I | I | I | I | I | I | ohne | I |
| Hexafluorpropylen | 4,4 | — | 3,9 | — | 4,5 | — | 4,7 | — | 4,7 | 1,6 |
| $MFI_{11}$-Wert (300°C) | 33 | 32 | 36 | 25 | 36 | 44 | 30 | 20 | 28 | 32 |
| Zugfestigkeit 160°C ($N/mm^2$) | 7,3 | 7,5 | 7,5 | 7,4 | 5,5 | 6,6 | 6,0 | 6,5 | 4,3 | 6,5 |
| Bruchdehnung 160°C (%) | 815 | 505 | 720 | 245 | 625 | 65 | 550 | 55 | 75 | 520 |
| Zugfestigkeit 23°C ($N/mm^2$) | 52,5 | 42,3 | 44,8 | 43,8 | 43,7 | 34,9 | 40,5 | 37,3 | 36,2 | 49,7 |
| Bruchdehnung 23°C (%) | 500 | 280 | 390 | 240 | 465 | 300 | 430 | 300 | 370 | 435 |

Fortsetzung zu TABELLE III

*Zusammensetzung und Eigenschaften der Quaterpolymeren im Vergleich zu entsprechenden Terpolymeren*

| Beispiel/Vergleichsbeispiel Nr. | 6 | 7 | F | 8 | G | 9 | H | 10 | 11 | 12 | 13 |
|---|---|---|---|---|---|---|---|---|---|---|---|
| Eingebaute Menge (Mol.-%) an: | | | | | | | | | | | |
| Tetrafluorethylen | 47,0 | 47,9 | 48,2 | 48,8 | 52,8 | 45,6 | 51,4 | 49,0 | 46,1 | 45,2 | 49,4 |
| Ethylen | 44,3 | 48,1 | 51,5 | 46,8 | 46,9 | 49,5 | 48,2 | 46,6 | 49,1 | 50,1 | 48,2 |
| «Sperriges» Vinylmonomer | 0,4 | 0,4 | 0,4 | 0,3 | 0,2 | 0,4 | 0,4 | 0,3 | 0,2 | 0,4 | 0,5 |
| Art des «sperrigen» Vinylmonomeren | I | II | II | III | III | IV | IV | V | IX | IX | III |
| Hexafluorpropylen | 8,4 | 3,6 | — | 4,2 | — | 4,5 | — | 4,0 | 4,5 | 4,3 | 1,8 |
| $MFI_{11}$-Wert (300°C) | 40 | 24 | 8 | 42 | 14 | 37 | 11 | 40 | 23 | 40 | 55 |
| Zugfestigkeit 160°C ($N/mm^2$) | 5,6 | 5,2 | 6,3 | 5,1 | 3,8 | 5,1 | 6,6 | 5,3 | 5,0 | 5,3 | 5,8 |
| Bruchdehnung 160°C (%) | 425 | 505 | 80 | 415 | 20 | 405 | 110 | 525 | 450 | 500 | 610 |
| Zugfestigkeit 23°C ($N/mm^2$) | 38,1 | 47 | 40,2 | 49,5 | 37,6 | 35,4 | 31,3 | 41,2 | 39,5 | 43,4 | 42,8 |
| Bruchdehnung 23°C (%) | 425 | 475 | 290 | 520 | 315 | 350 | 150 | 390 | 405 | 400 | 425 |

Fortsetzung zu TABELLE III

*Zusammensetzung und Eigenschaften der Quaterpolymeren im Vergleich zu entsprechenden Terpolymeren*

| Beispiel/Vergleichsbeispiel Nr. | I | J | 14 | K | 15*) | L*) | 16 | 17 | 18 |
|---|---|---|---|---|---|---|---|---|---|
| Eingebaute Menge (Mol.-%) an: | | | | | | | | | |
| Tetrafluorethylen | 52,9 | 52,5 | 45,4 | 51,7 | 48,5 | 51,5 | 48,1 | 51,0 | 49,3 |
| Ethylen | 46,6 | 46,5 | 50,7 | 48,1 | 48,9 | 47,9 | 50,0 | 46,5 | 46,1 |
| «Sperriges» Vinylmonomer | 0,5 | 1,0 | 0,2 | 0,2 | 0,6 | 0,6 | 0,1 | 0,2 | 0,3 |
| Art des «sperrigen» Vinylmonomeren | III | III | VI | VI | VII | VII | VIII | I | I |
| Hexafluorpropylen | — | — | 3,7 | — | 1,9 | — | 1,8 | 2,3 | 4,4 |
| $MFI_{11}$-Wert (300 °C) | 25 | 31 | 24 | 12 | 27 | 22 | 40 | 26 | 35 |
| Zugfestigkeit 160 °C ($N/mm^2$) | 4,0 | 7,1 | 6,0 | 5,2 | 6,2 | 6,4 | 5,8 | 5,6 | 6,5 |
| Bruchdehnung 160 °C (%) | 25 | 655 | 550 | 50 | 630 | 495 | 375 | 605 | 630 |
| Zugfestigkeit 23 °C ($N/mm^2$) | 24,9 | 47,4 | 41,1 | 24,6 | 43,2 | 36,0 | 40,9 | 43,7 | 44,5 |
| Bruchdehnung 23 °C (%) | 55 | 455 | 410 | 45 | 420 | 390 | 415 | 460 | 430 |

*) Zug-Dehnungswerte, gemessen bei 180 °C:
Beispiel 15: 4,2 $N/mm^2$; 480%
Vergleichsbeispiel L: 4,6 $N/mm^2$; 65%

Die in den vorstehenden Tabellen I, II, und III gebrauchten Abkürzungen haben folgende Bedeutungen:

I = $CF_2=CF-O-CF_2-CF_2-CF_3$

II = $CF_2=CF-O-CF-CF_2-O-CF_2-CF_2-CF_3$
|
$CF_3$

III = $CH_2=CH-CH_2-O-CF_2-CF_2H$

IV = $CH_2=CH-O-C-CH_3$
||
O

V =

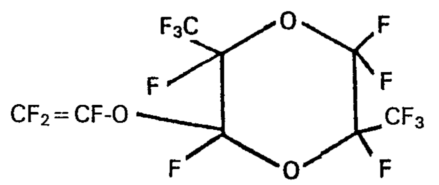

VI = $CH_2=CH\text{-}n\text{-}C_6F_{13}$

$CF_3$
|
VII = $CH_2=CH-CH_2-C-OH$
|
$CF_3$

VIII = $CF_2=CF\text{-}n\text{-}C_5F_{11}$

IX = $CH_2=CH-O-CF_2-CF_2H$

MDE = Malonsäurediethylester

CHX = Cyclohexan

F 113 = 1,1,2-Trichlortrifluorethan

*Beispiel 19*

Aus dem nach Beispiel 1 hergestellten Schmelzgranulat wird ein Drahtüberzug mit einer Dicke von 250 μm unter folgenden Bedingungen hergestellt: Extruder: Extrusiometer der Firma Göttfert; Massetemperatur: 340°C; Drahtmaterial: Cu-Draht, AWG 24/1, versilbert; Drahtvorwärmung: 80 bis 150°C; Düsendurchmesser: 5,5 mm; Dorndurchmesser: 3,5 mm; Düsentemperatur: 340°C; Extrusionsgeschwindigkeit: 36 m/min.

Der erhaltene, ummantelte Draht wird dem «Stress-Cracking»-Test bei 200°C unterworfen. Dieser Test wird von fünf parallel zueinander durchgeführten Drahtstücken bestanden.

Die Drahtummantelung wird abgezogen und bei Raumtemperatur auf ihre Zugfestigkeit und Bruchdehnung geprüft. Man misst eine Zugfestigkeit von 47 $N/mm^2$ und eine Bruchdehnung von 250%.

*Vergleichsbeispiel M*

Aus dem nach Vergleichsbeispiel A hergestellten Schmelzgranulat wird, wie unter Beispiel 19 beschrieben, ein Drahtüberzug mit einer Schichtdicke von 250 μm hergestellt. Auch dieser Draht wird dem «Stress-Cracking»-Test bei 200°C ausgesetzt. Von fünf parallel geprüften Drahtstücken zeigen zwei Risse in der Isolierung. Die verbleibenden drei Prüfkörper ergeben bei der elektrischen Prüfung Durchschläge.

Der abgezogene Drahtüberzug zeigt eine Zugfestigkeit von 45 $N/mm^2$ und eine Bruchdehnung von 185%, gemessen bei 23°C.

Wie aus einem Vergleich der Ergebnisse des Beispiels 19 mit den Ergebnissen des Vergleichsbeispiels M ersichtlich ist, zeigt der aus dem erfindungsgemässen Quaterpolymeren hergestellte Drahtüberzug bei vergleichbarem Einbau an Perfluorpropylvinylether ein besseres «Stress-Cracking»-Verhalten und bessere Zugfestigkeits- und Bruchdehnungswerte als der aus dem entsprechenden Terpolymeren hergestellte Drahtüberzug.

*Beispiele 20 und 21*

In den Beispielen 20 und 21 werden nach den Beispielen 4 und 15 hergestellte Schmelzgranulate zu einem Drahtüberzug von 125 μm Dicke unter folgenden Bedingungen verarbeitet:
Extruder: Extrusiometer der Firma Göttfert; Massetemperatur: 340°C; Drahtmaterial: Cu-Draht, AWG 24/1, versilbert; Drahtvorwärmung: 80 bis 150°C; Düsendurchmesser: 5,5 mm; Dorndurchmesser: 3,5 mm; Düsentemperatur: 340°C; Extrusionsgeschwindigkeit: 60 m/min.

Die Drahtüberzüge werden unmittelbar nach der Herstellung mit einer Prüfspannung von 8 kV auf elektrische Fehlstellen geprüft. Die nach Beispiel 20 und 21 hergestellten Drahtüberzüge zeigen keinen Durchschlag auf einer Länge von 1000 m Draht.

*Vergleichsbeispiel N*

Ein handelsübliches Terpolymeres, das neben Ethylen und Tetrafluorethylen als «sperrige» Drittkomponente ein Vinylmonomeres der Formel

$CF_3$
|
$CH_2=CH-CH_2-C-OH$
|
$CF_3$

enthält und einen $MFI_{11}$-Wert (300°C) von 37 g/10 min, einen Schmelzpunkt (DSC) von 277°C, einen Fluorgehalt von 60,7% und eine Dichte von 1,713 besitzt, wird unter den in den Beispielen 18 und 19 angegebenen Bedingungen zu einem Drahtüberzug mit einer Dicke von 125 μm verarbeitet und auf elektrische Fehlstellen geprüft. Bei fünfmaliger Prüfung findet man zwischen 40 und 140 elektrische Durchschläge pro 1000 m. Auch bei Erhöhung oder Erniedrigung der Verarbeitungstemperatur um 10°C kann kein durchschlagfreier Drahtüberzug erhalten werden.

*Beispiel 22*

Aus dem Quaterpolymeren des Beispiels 10 wird gemäss Beispiel 19 ein Drahtüberzug von 250 μm Dicke hergestellt und dann abgezogen. Daran wird bei 23°C eine Zugfestigkeit von 56 $N/mm^2$ und

215% Dehnung gemessen. Nach zehntägiger Lagerung des Drahtes bei 190°C wird eine Zugfestigkeit des Drahtüberzugs von 38 $N/mm^2$ und eine Bruchdehnung von 200% bei jeweils 23°C gemessen.

Im «Stress-Cracking»-Test bei 200°C werden bei fünf parallel geprüften Drahtstücken keine Risse oder elektrische Durchschläge festgestellt.

Aus dem Quaterpolymeren des Beispiels 10 wird ferner gemäss Beispiel 20 ein Drahtüberzug mit einer Dicke von 125 µm hergestellt, der keine elektrischen Fehlstellen auf 1000 m Länge zeigt.

**Patentansprüche**

1. Thermoplastisches, fluorhaltiges Quaterpolymeres, bestehend aus

a) 55 bis 30 Mol.-% an copolymerisierten Einheiten des Tetrafluorethylens,
b) 60 bis 40 Mol.-% an copolymerisierten Einheiten des Ethylens,

dadurch gekennzeichnet, dass dieses Quaterpolymere zusätzlich besteht aus

c) 10 bis 1,5 Mol.-% an copolymerisierten Einheiten des Hexafluorpropylens,
d) 2,5 bis 0,05 Mol.-% an copolymerisierten Einheiten eines Vinylmonomeren aus der Gruppe

$d_1$) der perfluorierten Olefine der Formel

$CF_2 = CF\text{-}Rf1$,

worin Rf1 ein Perfluoralkylrest mit 2 bis 10 C-Atomen ist,

$d_2$) der perfluorierten Vinylether der Formel

$CF_2 = CF\text{-}O\text{-}Rf2$,

worin Rf2 ein Perfluoralkylrest mit 2 bis 10 C-Atomen ist,

$d_3$) der perfluorierten Vinylether der Formel

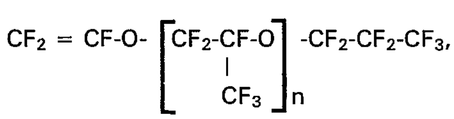

worin n = 1 bis 4 ist,

$d_4$) der perfluorierten Vinylether der Formel

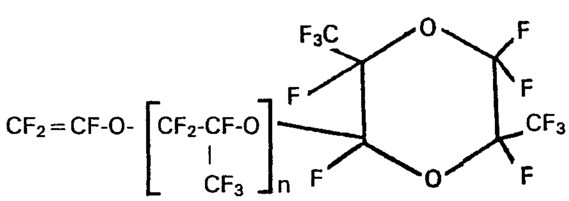

worin n = 0 bis 1 ist,

$d_5$) Perfluor-2-methylen-4-methyl-1,3--dioxolan,

$d_6$) der perfluorierten Vinylether der Formel

$CF_2 = CF\text{-}O\text{-}(CF_2)_n\text{-}COX_1$,

worin $X_1$ für F, OH, $OR_1$ oder $NR_2R_3$, $R_1$ für eine Alkylgruppe mit 1 bis 3 C-Atomen und $R_2$ und $R_3$ jeweils für ein Wasserstoffatom oder für $R_1$ stehen und n eine Zahl von 1 bis 10 bedeutet,

$d_7$) der perfluorierten Vinylether der Formel

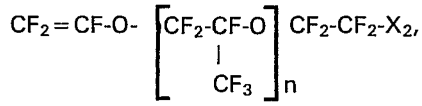

worin $X_2$ für $COOR_4$, COOH oder CN steht, $R_4$ eine Alkylgruppe mit 1 bis 4 C-Atomen und n eine Zahl von 1 bis 4 bedeutet,

$d_8$) der perfluoralkylsubstituierten Vinylverbindungen der Formel

$CH_2 = CH\text{-}Rf3$,

worin Rf3 ein Perfluoralkylrest mit 2 bis 10 C-Atomen ist,

$d_9$) 1,1,1-Trifluor-2-(trifluormethyl)-4-penten--2-ol,

$d_{10}$) Allyl-1-hydroxyhexafluorisopropylether,

$d_{11}$) der fluorierten Allylether der Formel

$CH_2 = CR_5\text{-}CH_2\text{-}O\text{-}CF_2\text{-}CFX_3H$,

worin $X_3$ = F, Cl oder Trifluormethyl ist und $R_5$ = H oder $CH_3$ ist,

$d_{12}$) der fluorierten Vinylether der Formel

$CH_2 = CH\text{-}O\text{-}CF_2\text{-}CFX_3H$,

worin $X_3$ = F, Cl oder Trifluormethyl ist,

$d_{13}$) der Allyl- oder Methallylester der Formel

$CH_2 = CR_6\text{-}CH_2\text{-}OCO\text{-}R_7$,

worin $R_6$ = H oder $CH_3$ und $R_7$ ein Alkylrest mit 1 bis 3 C-Atomen ist,

$d_{14}$) der Vinylester der Formel

$CH_2 = CH\text{-}O\text{-}CO\text{-}R_8$,

worin $R_8$ ein Alkylrest mit 1 bis 3 C-Atomen ist, wobei die Quaterkomponente d) gegebenenfalls aus copolymerisierten Einheiten von mehreren der unter $d_1$) bis $d_{14}$) genannten Monomeren bestehen kann.

2. Thermoplastisches, fluorhaltiges Quaterpolymeres gemäss Anspruch 1, dadurch gekennzeichnet, dass es besteht aus

a) 55 bis 40 Mol.-% an copolymerisierten Einheiten des Tetrafluorethylens,
b) 55 bis 45 Mol.-% an copolymerisierten Einheiten des Ethylens,
c) 8 bis 3 Mol.-% an copolymerisierten Einheiten des Hexafluorpropylens,
d) 1 bis 0,1 Mol.-% an copolymerisierten Einheiten eines Vinylmonomeren aus den Gruppen $d_1$) bis $d_{14}$).

3. Thermoplastisches, fluorhaltiges Quaterpolymeres gemäss Anspruch 1, dadurch gekennzeichnet, dass es besteht aus

a) 55 bis 40 Mol.-% an copolymerisierten Einheiten des Tetrafluorethylens,
b) 55 bis 45 Mol.-% an copolymerisierten Einheiten des Ethylens,
c) 5 bis 3 Mol.-% an copolymerisierten Einheiten des Hexafluorpropylens,
d) 0,8 bis 0,2 Mol.-% an copolymerisierten Einheiten eines Vinylmonomeren aus den Gruppen $d_1$) bis $d_{14}$).

4. Thermoplastisches, fluorhaltiges Quaterpolymeres gemäss einem der Ansprüche 1 bis 3, dadurch gekennzeichnet, dass die Komponente d) ein perfluoriertes Olefin der Formel $CF_2=CF\text{-}Rf1$ ist, worin Rf1 einen Perfluoralkylrest mit 2 bis 5 C-Atomen bedeutet.

5. Thermoplastisches, fluorhaltiges Quaterpolymeres gemäss einem der Ansprüche 1 bis 3, dadurch gekennzeichnet, dass die Komponente d) ein perfluorierter Vinylether der Formel $CF_2=CF\text{-}O\text{-}Rf2$ ist, worin Rf2 einen Perfluoralkylrest mit 2 bis 4 C-Atomen bedeutet.

6. Thermoplastisches, fluorhaltiges Quaterpolymeres gemäss einem der Ansprüche 1 bis 3, dadurch gekennzeichnet, dass die Komponente d) ein perfluorierter Vinylether der Formel

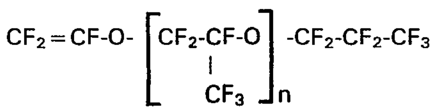

ist, worin n = 1 oder 2 bedeutet.

7. Thermoplastisches, fluorhaltiges Quaterpolymeres gemäss einem der Ansprüche 1 bis 3, dadurch gekennzeichnet, dass die Komponente d) ein perfluorierter Vinylether der Formel

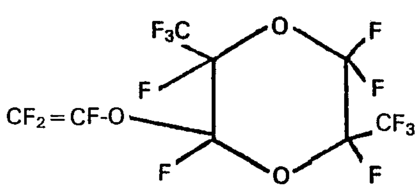

ist.

8. Thermoplastisches, fluorhaltiges Quaterpolymeres gemäss einem der Ansprüche 1 bis 3, dadurch gekennzeichnet, dass die Komponente d) eine perfluoralkylsubstituierte Vinylverbindung der Formel $CH_2=CH\text{-}Rf3$ ist worin Rf3 einen Perfluoralkylrest mit 2 bis 6 C-Atomen bedeutet.

9. Thermoplastisches, fluorhaltiges Quaterpolymeres gemäss einem der Ansprüche 1 bis 3, dadurch gekennzeichnet, dass die Komponente d) 1,1,1-Trifluor-2-(trifluormethyl)-4-penten-2-ol ist.

10. Thermoplastisches, fluorhaltiges Quaterpolymeres gemäss einem der Ansprüche 1 bis 3, dadurch gekennzeichnet, dass die Komponente d) ein Allylether der Formel

$$CH_2=CR_5\text{-}CH_2\text{-}O\text{-}CF_2\text{-}CFX_3H$$

ist, worin $R_5$ = H oder $CH_3$ und $X_3$ = F, Cl oder $CF_3$ ist.

11. Thermoplastisches, fluorhaltiges Quaterpolymeres gemäss einem der Ansprüche 1 bis 3, dadurch gekennzeichnet, dass die Komponente d) der Vinylether der Formel

$$CH_2=CH\text{-}O\text{-}CF_2\text{-}CF_2H$$

ist.

12. Quaterpolymeres gemäss einem der Ansprüche 1 bis 11, dadurch gekennzeichnet, dass es einen MFI-Wert, gemessen unter einer Belastung durch eine Masse von 11 kg bei 300°C, von 5 bis 200 g/10 min besitzt.

13. Quaterpolymeres gemäss einem der Ansprüche 1 bis 11, dadurch gekennzeichnet, dass es einen MFI-Wert, gemessen unter einer Belastung durch eine Masse von 11 kg bei 300°C, von 15 bis 50 g/10 min besitzt.

14. Verwendung der Quaterpolymeren gemäss einem oder mehreren der Ansprüche 1 bis 13 zur Herstellung von Formkörpern nach dem Extrusions- oder Spritzguss-Verfahren.

15. Verwendung der Quaterpolymeren gemäss einem oder mehreren der Ansprüche 1 bis 13 zur Herstellung von Monofilen.

16. Verwendung der Quaterpolymeren gemäss einem oder mehreren der Ansprüche 1 bis 11 und 13 zur Herstellung von Drahtummantelungen für metallische, elektrische Leiter.

**Claims**

1. A thermoplastic, fluorine-containing quaterpolymer composed of

a) 55 to 30 mole % of copolymerized units of tetrafluoroethylene,

b) 60 to 40 mole % of copolymerized units of ethylene,

characterized in that said quaterpolymer contains additionally

c) 10 to 1.5 mole % of copolymerized units of hexafluoropropylene,

d) 2.5 to 0.05 mole % of copolymerized units of a vinyl monomer from the group comprising

$d_1$) perfluorinated olefins of the formula

$$CF_2 = CF\text{-}Rf1,$$

in which Rf1 is a perfluoroalkyl radical having 2 to 10 C atoms,

$d_2$) perfluorinated vinyl ethers of the formula

$$CF_2 = CF\text{-}O\text{-}Rf2,$$

in which Rf2 is a perfluoroalkyl radical having 2 to 10 C atoms,

$d_3$) perfluorinated vinyl ethers of the formula

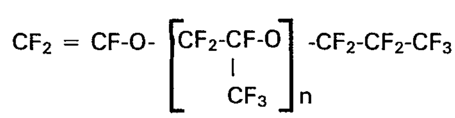

in which n is 1 to 4,

$d_4$) perfluorinated vinyl ethers of the formula

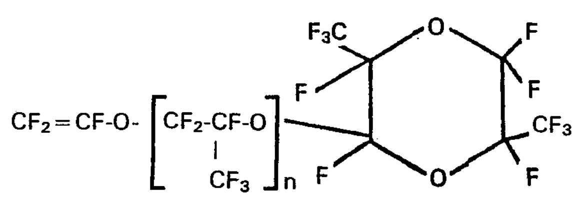,

in which n is 0 to 1,

$d_5$) perfluoro-2-methylene-4-methyl-1,3-dioxolane,

$d_6$) perfluorinated vinyl ethers of the formula

$$CF_2 = CF\text{-}O\text{-}(CF_2)_n\text{-}COX_1,$$

in which $X_1$ represents F, OH, $OR_1$ or $NR_2R_3$, $R_1$ represents an alkyl group having 1 to 3 C atoms and $R_2$ and $R_3$ each represent a hydrogen atom or $R_1$ and n denotes a number from 1 to 10,

$d_7$) perfluorinated vinyl ethers of the formula

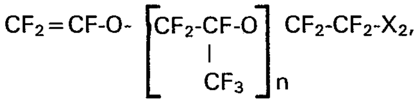

in which $X_2$ represents $COOR_4$, COOH or CN, $R_4$ denotes an alkyl group having 1 to 4 C atoms and n denotes a number from 1 to 4,

$d_8$) perfluoroalkyl-substituted vinyl compounds of the formula

$CH_2 = CH\text{-}Rf3$,

in which Rf3 is a perfluoroalkyl radical having 2 to 10 C atoms,

$d_9$) 1,1,1-trifluoro-2-(trifluoromethyl)-4--penten-2-ol

$d_{10}$) allyl 1-hydroxyhexafluoroisopropyl ether,

$d_{11}$) fluorinated allyl ethers of the formula

$CH_2 = CR_5\text{-}CH_2\text{-}O\text{-}CF_2\text{-}CFX_3H$

in which $X_3$ is F, Cl or trifluoromethyl and $R_5$ is H or $CH_3$,

$d_{12}$) fluorinated vinyl ethers of the formula

$CH_2 = CH\text{-}O\text{-}CF_2\text{-}CFX_3H$

in which $X_3$ is F, Cl or trifluoromethyl,

$d_{13}$) allyl esters or methallyl esters of the formula

$CH_2 = CR_6\text{-}CH_2\text{-}OCO\text{-}R_7$

in which $R_6$ is H or $CH_3$ and $R_7$ is an alkyl radical having 1 to 3 C atoms, and

$d_{14}$) vinyl esters of the formula

$CH_2 = CH\text{-}O\text{-}CO\text{-}R_8$

in which $R_8$ is an alkyl radical having 1 to 3 C atoms,
the quater-component d) optionally being composed of copolymerized units of more than one of the monomers as defined in $d_1$) to $d_{14}$).

2. A thermoplastic, fluorine-containing quaterpolymer as claimed in claim 1, characterized in that it is composed of

a) 55 to 40 mole % of copolymerized units of tetrafluoroethylene.
b) 55 to 45 mole % of copolymerized units of ethylene,
c) 8 to 3 mole % of copolymerized units of hexafluoropropylene and
d) 1 to 0.1 mole % of copolymerized units of a vinyl monomer selected from the groups $d_1$) to $d_{14}$).

3. A thermoplastic, fluorine-containing quaterpolymer as claimed in claim 1, characterized in that it is composed of

a) 55 to 45 mole % of copolymerized units of tetrafluoroethylene,
b) 55 to 45 mole % of copolymerized units of ethylene,
c) 5 to 3 mole % of copolymerized units of hexafluoropropylene and
d) 0.8 to 0.2 mole % of copolymerized units of a vinyl monomer selected from the groups $d_1$) to $d_{14}$).

4. A thermoplastic, fluorine-containing quaterpolymer as claimed in any of claims 1 to 3, characterized in that the component d) is a perfluorinated olefin of the formula $CF_2=CF\text{-}Rf1$, in which Rf1 denotes a perfluoroalkyl radical having 2 to 5 C atoms.

5. A thermoplastic, fluorine-containing quaterpolymer as claimed in any of claims 1 to 3, characterized in that the component d) is a perfluorinated vinyl ether of the formula $CF_2=CF\text{-}O\text{-}Rf2$, in which Rf2 denotes a perfluoroalkyl radical having 2 to 4 C atoms.

6. A thermoplastic, fluorine-containing quaterpolymer as claimed in any of claims 1 to 3, characterized in that the component d) is a perfluorinated vinyl ether of the formula

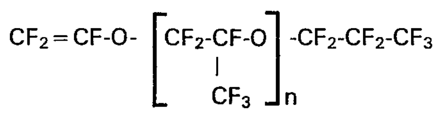

in which n denotes 1 or 2.

7. A thermoplastic, fluorine-containing quaterpolymer as claimed in any of claims 1 to 3, characterized in that the component d) is a perfluorinated vinyl ether of the formula

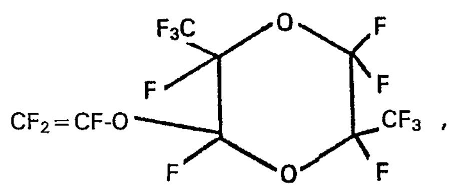

8. A thermoplastic, fluorine-containing quaterpolymer as claimed in any of claims 1 to 3, characterized in that the component d) is a perfluoroalkyl--substituted vinyl compound of the formula $CH_2 = CH\text{-}Rf3$, in which Rf3 denotes a perfluoroalkyl radical having 2 to 6 C atoms.

9. A thermoplastic, fluorine-containing quaterpolymer as claimed in any of claims 1 to 3, characterized in that the component d) is 1,1,1-trifluoro--2-(trifluoromethyl)-4-penten-2-ol.

10. A thermoplastic, fluorine-containing quaterpolymer as claimed in any of claims 1 to 3, characterized in that the component c) is an allyl ether of the formula

$CH_2=CR_5\text{-}CH_2\text{-}O\text{-}CF_2\text{-}CFX_3H$

in which $R_5$ is H or $CH_3$ and $X_3$ is F, Cl or $CF_3$.

11. A thermoplastic, fluorine-containing quaterpolymer as claimed in any of claims 1 to 3, characterized in that the component d) is a vinyl ether of the formula

$CH_2=CH\text{-}O\text{-}CF_2\text{-}CF_2H$.

12. A quaterpolymer as claimed in any of claims 1 to 11, characterized by an MFI value of 5 to 200

g/10 minutes, measured at 300°C under a load weighing 11 kg.

13. A quaterpolymer as claimed in any of claims 1 to 11, characterized by an MFI value of 15 to 50 g/10 minute, measured at 300°C under a load weighing 11 kg.

14. The use of a quaterpolymer as claimed in one or more of claims 1 to 13 for the manufacture of shaped articles by the extrusion process or injection-molding process.

15. The use of a quaterpolymer as claimed in one or more of claims 1 to 13 for the manufacture of monofilaments.

16. The use of a quaterpolymer as claimed in one or more of claims 1 to 11 and 13 for the production of wire sheathings for metallic electrical conductors.

## Revendications

1. Polymère quaternaire thermoplastique contenant du fluor, constitué

a) de 55 à 30%-molaire de motifs copolymérisés de tétrafluoréthylène,

b) de 60 à 40%-molaire de motifs copolymérisés d'éthylène,

caractérisé en ce que ce polymère quaternaire est constitué en outre

c) de 10 à 1,5%-molaire de motifs copolymérisés d'hexafluoropropylène,

d) de 2,5 à 0,5%-molaire de motifs copolymérisés d'un monomère vinylique appartenant au groupe comprenant

$d_1$) les alcènes perfluorés de formule

$CF_2 = CF\text{-}Rf1$,

où Rf1 est un radical perfluoralkyle à 2 à 10 atomes de carbone,

$d_2$) les éthers vinyliques perfluorés de formule

$CF_2 = CF\text{-}O\text{-}Rf2$,

où Rf2 est un radical perfluoralkyle à 2 à 10 atomes de carbone,

$d_3$) les éthers vinyliques perfluorés de formule

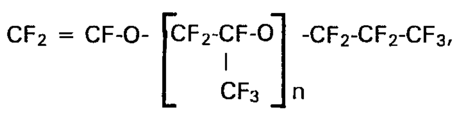

où n = 1 à 4,

$d_4$) les éthers vinyliques perfluorés de formule

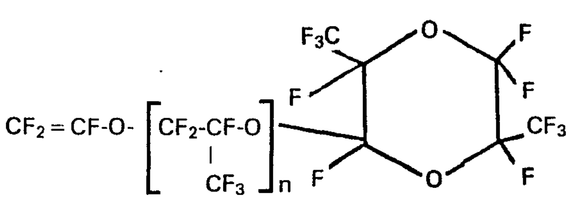

où n = 0 ou 1,

$d_5$) le perfluoro(méthylène-2 méthyl-4 dioxolanne-1,3),

$d_6$) les éthers vinyliques perfluorés de formule

$CF_2 = CF\text{-}O\text{-}(CF_2)_n\text{-}COX_1$

où $X_1$ est F, OH, $OR_1$ ou $NR_2R_3$, $R_1$ est un groupe alkyle à 1 à 3 atomes de carbone et $R_2$ et $R_3$ sont chacun un atome d'hydrogène ou $R_1$, et n est un nombre entre 1 et 10,

$d_7$) les éthers vinyliques perfluorés de formule

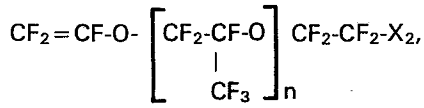

où $X_2$ est $COOR_4$, COOH ou CN, $R_4$ est un groupe alkyle à 1 à 4 atomes de carbone et n est un nombre compris entre 1 et 4,

$d_8$) les composés vinyliques perfluoralkyle-substitués de formule

$CH_2 = CH\text{-}Rf3$,

où Rf3 est un radical perfluoralkyle à 2 à 10 atomes de carbone,

$d_9$) le trifluoro-1,1,1 trifluorométhyl-2 pentène-4 ol-2,

$d_{10}$) l'oxyde d'allyle et de hydroxy-1 hexafluorisopropyle,

$d_{11}$) les éthers allyliques fluorés de formule

$CH_2 = CR_5\text{-}CH_2\text{-}O\text{-}CF_2\text{-}CFX_3H$

où $X_3$ = F, Cl ou le radical trifluorométhyle et $R_5$ = H ou $CH_3$,

$d_{12}$) les éthers vinyliques fluorés de formule

$CH_2 = CH\text{-}O\text{-}CF_2\text{-}CFX_3H$

où $X_3$ = F, Cl ou est le radical trifluorométhyle,

$d_{13}$) les esters allyliques ou méthallyliques de formule

$CH_2 = CR_6\text{-}CH_2\text{-}OCO\text{-}R_7$

où $R_6$ = H ou $CH_3$ et $R_7$ est un radical alkyle à 1 à 3 atomes de carbone,

$d_{14}$) les esters vinyliques de formule

$CH_2 = CH\text{-}O\text{-}CO\text{-}R_8$

où $R_8$ est un radical alkyle à 1 à 3 atomes de carbone, le composant quaternaire d) pouvant éventuellement être constitué de motifs copolymérisés de plusieurs des monomères mentionnés en $d_1$) à $d_{14}$).

2. Polymère quaternaire thermoplastique contenant du fluor selon la revendication 1, caractérisé en ce qu'il est constitué

a) de 55 à 40%-molaire de motifs copolymérisés de tétrafluoréthylène,

b) de 55 à 45%-molaire de motifs copolymérisés d'éthylène,

c) de 8 à 3%-molaire de motifs copolymérisés de hexafluoropropylène,

d) de 1 à 0,1%-molaire de motifs copolymérisés d'un monomère vinylique des groupes $d_1$) à $d_{14}$).

3. Polymère quaternaire thermoplastique contenant du fluor selon la revendication 1, caractérisé en ce qu'il est constitué

a) de 55 à 40%-molaire de motifs copolymérisés de tétrafluoréthylène,

b) de 55 à 45%-molaire de motifs copolymérisés d'éthylène,

c) de 5 à 3%-molaire de motifs copolymérisés de hexafluoropropylène,

d) de 0,8 à 0,2%-molaire de motifs copolymérisés d'un monomère vinylique des groupes $d_1$) à $d_{14}$).

4. Polymère quaternaire thermoplastique contenant du fluor selon l'une des revendications 1 à 3, caractérisé en ce que le composant d) est un alcène perfluoré de formule $CF_2$ = CF-Rf1, Rf1 étant un radical perfluoralkyle à 2 à 5 atomes de carbone.

5. Polymère quaternaire thermoplastique contenant du fluor selon l'une des revendications 1 à 3, caractérisé en ce que le composant d) est un éther vinylique perfluoré de formule $CF_2$ = CF-O-Rf2, Rf2 étant un radical perfluoralkyle à 2 à 4 atomes de carbone.

6. Polymère quaternaire thermoplastique contenant du fluor selon l'une des revendications 1 à 3, caractérisé en ce que le composant d) est un éther vinylique perfluoré de formule

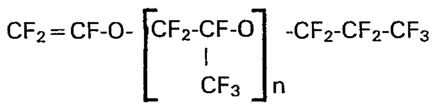

où n = 1 ou 2.

7. Polymère quaternaire thermoplastique contenant du fluor selon l'une des revendications 1 à 3, caractérisé en ce que le composant d) est un éther vinylique perfluoré de formule

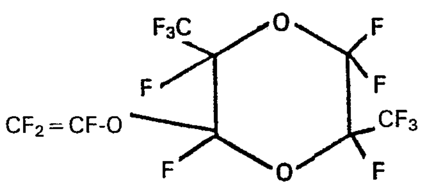 ,

8. Polymère quaternaire thermoplastique contenant du fluor selon l'une des revendications 1 à 3, caractérisé en ce que le composant d) est un composé vinylique perfluoralkyle-substitué de formule $CH_2$ = CH-Rf3, Rf3 étant un radical perfluoralkyle à 2 à 6 atomes de carbone.

9. Polymère quaternaire thermoplastique contenant du fluor selon l'une des revendications 1 à 3, caractérisé en ce que le composant d) est le trifluoro-1,1,1 trifluorométhyl-2 pentène-4 ol-2.

10. Polymère quaternaire thermoplastique contenant du fluor selon l'une des revendications 1 à 3, caractérisé en ce que le composant d) est un éther allylique de formule

$$CH_2=CR_5-CH_2-O-CF_2-CFX_3H$$

où $R_5$ = H ou $CH_3$ et $X_3$ = F, Cl ou $CF_3$.

11. Polymère quaternaire thermoplastique contenant du fluor selon l'une des revendications 1 à 3, caractérisé en ce que le composant d) est l'éther vinylique de formule

$$CH_2=CH-O-CF_2-CF_2H$$

12. Polymère quaternaire selon l'une des revendications 1 à 11, caractérisé en ce qu'il présente un indice de fluidité, mesuré sous une charge provoquée par une masse de 11 kg à 300°C, de 5 à 200 g/10 min.

13. Polymère quaternaire selon l'une des revendications 1 à 11, caractérisé en ce qu'il présente un indice de fluidité mesuré sous une charge due à une masse de 11 kg à 300°C, de 15 à 50 g/10 min.

14. Utilisation des polymères quaternaires selon une ou plusieurs des revendications 1 à 13, pour la préparation de corps façonnés par le procédé d'extrusion ou de moulage par injection.

15. Utilisation du polymère quaternaire selon une ou plusieurs des revendications 1 à 13 pour la préparation de monofils.

16. Utilisation des polymères quaternaires selon une ou plusieurs des revendications 1 à 11 et 13 pour la préparation de revêtements pour fils, pour conducteurs électriques métalliques.